(19) **Europäisches Patentamt**

**European Patent Office**

**Office européen des brevets**

(11) Publication number: **0 422 684 B1**

(12) **EUROPEAN PATENT SPECIFICATION**

(45) Date of publication of patent specification: **18.01.95** (51) Int. Cl.⁶: **C09D 127/16**, C08J 3/11, //(C09D127/16,133:06)

(21) Application number: **90119665.9**

(22) Date of filing: **13.10.90**

(54) **Coating composition.**

(30) Priority: **13.10.89 JP 267291/89**
    **27.09.90 JP 260075/90**

(43) Date of publication of application:
    **17.04.91 Bulletin 91/16**

(45) Publication of the grant of the patent:
    **18.01.95 Bulletin 95/03**

(84) Designated Contracting States:
    **DE FR GB IT**

(56) References cited:
    **EP-A- 0 364 316**
    **US-A- 3 053 818**

(73) Proprietor: **DAIKIN INDUSTRIES, LIMITED**
    **Umeda Center Building,**
    **4-12, Nakazaki-nishi 2-chome,**
    **Kita-ku**
    **Osaka-shi, Osaka-fu (JP)**

(72) Inventor: **Kubo, Motonobu**
    **22-10, Niina 5-chome**
    **Minoo-shi,**
    **Osaka-fu (JP)**
    Inventor: **Inukai, Hiroshi**
    **15-1-408, Miyata-cho 3-chome**
    **Takatsuki-shi,**
    **Osaka-fu (JP)**
    Inventor: **Kitahara, Takahiro**
    **1-C22-101, Tsukumodai 2-chome**
    **Suita-shi,**
    **Osaka-fu (JP)**

(74) Representative: **Schüler, Horst, Dr.**
    **Patentanwalt,**
    **Kaiserstrasse 69**
    **D-60329 Frankfurt (DE)**

Rank Xerox (UK) Business Services
(3.10/3.09/3.3.3)

**Description**

DESCRIPTION OF THE PRIOR ART

Homopolymers of vinylidene fluoride are known to have excellent properties as weather-resistant coating materials. However, since the homopolymer of vinylidene fluoride applied for coating necessitates baking at high temperatures, the homopolymer can not be used on site. Thus the use of such homopolymers has been limited to shop painting such as precoating.

In recent years, fluoroolefin/vinyl ether copolymers have come into use as cold-setting coating materials to obviate the above limitation. Yet these copolymers are of two-pack type which requires the on site mixing of the main component (varnish) and a curing agent (isocyanate) at the specified ratio. The two components must be mixed exactly at the specified ratio because the mixing outside the range of specified ratio results in failure to provide a coating composition with the desired properties. The requirement for on site precise mixing poses a problem in practical use.

To resolve this problem, vinylidene fluoride has been copolymerized with another fluoroolefin to provide a copolymer having a higher solubility in organic solvents in an attempt to develop coating compositions which are curable at room temperature. Heretofore developed are, for example, a copolymer of vinylidene fluoride and tetrafluoroethylene (e.g. trademark "VT-100", product of Daikin Ind., Ltd.; trademark "KYNAR-SL", product of Pennwalt Co., Ltd.), a copolymer of vinylidene fluoride, tetrafluoroethylene and hexafluoropropylene (e.g. trademark "KYNAR-ADS", product of Pennwalt Co., Ltd.), etc.

Among the above two types of copolymers, the former are soluble only in a limited range of solvents, and the resulting solution has a high viscosity and is therefore difficult to apply, whereas the latter have the problems that they are similar in composition to fluororubber and give a coating film which is soft and easily scratched and that because of their low melting point, the temperatures at which they are used are lower than those for conventional homopolymers of vinylidene fluoride.

US-A-3 053 818 further describes trifluoro-chloro-ethylene interpolymers which also are considered as rubbery polymers and therefore are not useful for the purposes of the present invention.

Starting from this above described state of the art it is an object of the present invention to provide a coating composition in which the fluorine-type copolymer has an improved solubility in organic solvents to mitigate the foregoing problem, and which is excellent in weatherability and coating amenability.

DETAILED DESCRIPTION OF THE INVENTION

Our research revealed that fluorine-type copolymers comprising structural units of the formulas a) $-CH_2-CF_2-$, b) $-CF_2-CF_2-$ and c) $-CF_2-CFCl-$ have a high melting point and a high solubility in organic solvents and are soluble in various organic solvents, hence suitable for use as coating materials.

According to the present invention, there is provided a coating composition prepared by dissolving a fluorine-type copolymer in an organic solvent, the copolymer comprising:

i) 50 to 90 mole% of a structural unit represented by the formula a)

$-CH_2-CF_2-$

ii) 5 to 30 mole% of a structural unit represented by the formula b)

$-CF_2-CF_2-$

and
iii) 5 to 30 mole% of a structural unit represented by the formula c)

$-CF_2-CFCl-$

The fluorine-type copolymer to be used in the invention comprises structural units of the formulas a) to c). The fluorine-type copolymers comprising 50 to 90 mole% of the structural unit a), 5 to 30 mole% of the structural unit b) and 5 to 30 mole% of the structural unit c), preferably 70 to 85 mole% of the structural unit a), 10 to 20 mole% of the structural unit b) and 5 to 15 mole% of the structural unit c), have a melting point of not lower than 80°C, an improved heat resistance and an enhanced solubility in organic solvents.

Our research also revealed that a fluorine-type copolymer comprising a fluoroolefin-structural unit d) as well as the structural units a) to c) has a higher solubility in organic solvents and a higher compatibility with the acrylic resins to be described later.

Stated more specifically, the present invention includes a coating composition prepared by dissolving a fluorine-type copolymer in an organic solvent, the copolymer comprising:

i) 50 to 89,9 mole% of a structural unit represented by the formula a)

$-CH_2-CF_2-$

ii) 5 to 30 mole% of a structural unit represented by the formula b)

$-CF_2-CF_2-$

iii) 5 to 30 mole% of a structural unit represented by the formula c)

$-CF_2-CFCl-$

and

iv) 0.1 to 10 mole% of a fluoroolefin-structural unit d).

Examples of the fluoroolefin useful in the invention are trifluoroethylene (TrFE), vinyl fluoride (VF), hexafluoropropylene (HFP), perfluoro(alkyl vinyl ether) (PAVE),.

The proportions of structural units a) to d) in the copolymer comprising the structural units a) to d) are 50 to 90 mole% of the structural unit a), 5 to 30 mole% of the structural unit b), 5 to 30 mole% of the structural unit c) and 0.1 to 10 mole% of the structural unit d), preferably 70 to 84,9 mole% of the structural unit a), 10 to 20 mole% of the structural unit b), 5 to 15 mole% of the structural unit c) and 0.1 to 10 mole% of the structural unit d).

If the proportion of the fluoroolefin-structural unit d) in the copolymer exceeds 10 mole%, the copolymer is given a reduced solubility in organic solvents and provides a coating film with a soft surface which is easily scratched.

These fluorine-type copolymers are prepared by copolymerizing vinylidene fluoride, tetrafluoroethylene and trifluorochloroethylene, or vinylidene fluoride, tetrafluoroethylene, trifluorochloroethylene and fluoroolefin, usually by emulsion, suspension or solution polymerization method. The polymerization temperature in any polymerization method is 0 to 150°C, preferably 5 to 95°C. The polymerization pressure in any polymerization method is 1 to 50 kg/cm²G. The polymerization medium to be used is, for example: water in emulsion polymerization; water, chlorofluorohydrocarbons such as 1,1,2-trichloro-1,2,2-trifluoroethane or 1,2-dichloro-1,1,2,2-tetrafluoroethane or mixtures thereof in suspension polymerization; and ethyl acetate, butyl acetate or mixtures thereof in solution polymerization. The emulsifier to be used in emulsion polymerization includes, for example, $C_7F_{15}COONH_4$, $H(CF_2)_8COONH_4$, $H(CF_2)_6COONH_4$ or $C_7F_{15}COONa$ Polymerization initiators useful for emulsion polymerization are redox initiators including oxidizing agents (such as ammonium persulfate, potassium persulfate, etc.), reducing agents (such as sodium sulfite, etc.), and salts of transition metals (such as ferrous sulfate, etc.). For suspension or solution polymerization, useful initiators are azo compounds and organic peroxides (such as azobisisobutyronitrile, isobutyryl peroxide, octanoyl peroxide, di-iso-propylperoxy dicarbonate, etc.).

As to the molecular weight, the fluorine-type copolymers thus obtained have an intrinsic viscosity of 0.15 to 0.80 in dimethylformamide (DMF) at 35°C at which the copolymer gives a coating film of increased strength and has an enhanced solubility in organic solvents.

Organic solvents useful in the invention, although not specifically limited, are preferably ketones and esters which have a boiling point of 60 to 250°C in view of the solubility. Examples of such ketones and esters are acetone, methyl ethyl ketone, methyl isobutyl ketone, cyclohexanone, ethyl acetate, n-butyl acetate or methyl cellosolve acetate, These solvents are usable singly or at least two of them can be used in mixture. Also usable are tetrahydrofuran, dimethylformamide, dimethylacetoamide, etc. When required, a small amount of an aromatic solvent such as toluene, or xylene, or an alcohol may be added.

The fluorine-type copolymer can be well dissolved in these solvents to give a coating composition having a wide range of low to high concentrations. The coating composition provides a coating film which is excellent in gloss and weatherability.

The mixing ratio of the fluorine-type copolymer and the organic solvent is not specifically limited, and may be in the range such that the concentration of the resin solid is 5 to 50% by weight, preferably 30 to 50% by weight. The mixing method is not specifically limited, and can be any of conventional methods. For example, the components are fully mixed by a ball mill, paint shaker, or sand mill. When required, conventional additives for coating compositions can be added before mixing. Useful additives include pigments, viscosity modifiers, leveling agents, UV absorbers, anti-skinning agents, dispersants, anti-foaming agents and the like.

Our research further revealed that when a thermoplastic acrylic resin is added to the fluorine-type copolymer and the organic solvent, the components in the composition are rendered more dispersible, whereby the adhesion of the resulting coating film is increased. In other words, the present invention includes a coating composition prepared by dissolving the fluorine-type copolymer and the thermoplastic acrylic resin in the organic solvent.

In preparation of the coating composition comprising the fluorine-type copolymer composed of the structural units a) to c) and the thermoplastic acrylic resin dissolved in the organic solvent, the copolymer for use is comprised of preferably 70 to 80,5 mole% of the structural unit a), 10 to 20 mole% of the structural unit b) and 9.5 to 15 mole% of the structural unit c).

In the case of the above proportions, a high compatibility results between the fluorine-type copolymer comprised of the structural units a) to c) and the thermoplastic acrylic resin.

In preparation of the coating composition comprising the fluorine-type copolymer composed of the structural units a) to d) and the thermoplastic acrylic resin dissolved in the organic solvent, the copolymer for use is comprised of preferably 70 to 84,9 mole% of the structural unit a), 10 to 20 mole% of the structural unit b), 5 to 15 mole% of the structural unit c), and 0.1 to 10 mole% of the structural unit d), more preferably 70 to 80 mole% of the structural unit a), 10 to 20 mole% of the structural unit b), 9.5 to 15 mole% of the structural unit c), and 0.5 to 5 mole% of the structural unit d).

Acrylic resins to be used conjointly with the fluorine-type copolymer in the invention are preferably thermoplastic ones, and can be selected from conventional ones without specific limitation. The term "thermoplastic acrylic resin" used herein generally refers to non-curing thermoplastic acrylic resins free of reactive group. Examples of such acrylic resins are homopolymers or copolymers of monomers such as methyl methacrylate (MMA), ethyl methacrylate (EMA), n-butyl methacrylate (BMA), isobutyl methacrylate (IBMA), methyl acrylate (MA) or ethyl acrylate (EA), These polymers are usable singly or at least two of them can be used in mixture. As to the molecular weight, the acrylic resin for use herein has preferably an intrinsic viscosity of 0.05 to 0.50 in DMF at 35°C. The acrylic resin used along with the fluorine-type copolymer is highly soluble in the organic solvent and the obtained coating film is outstanding in gloss and weatherability.

The amount of the acrylic resin used is 10 to about 1,900 parts by weight, preferably 10 to 400 parts by weight, per 100 parts by weight of the fluorine-type copolymer.

When a thermosetting acrylic resin containing reactive group is used for preparation of a coating composition, it is necessary to cure the group with a curing agent at room temperature or an elevated temperature after application. For this necessity, the coating composition is provided in a two-pack form, and the mixture of components must be mixed with the curing agent exactly at the specified ratio. On the other hand, the thermoplastic acrylic resin as used eliminates this necessity, hence is proper for practical use.

The coating composition of the invention is applied to a substrate and dried at a temperature of 10 to 200°C, preferably 20 to 50°C for hours to days, giving a sturdy coating film of high weatherability which is not easily scratched. Substrates to which the coating composition of the invention can be applied are those made of aluminum, iron, stainless steel or like metals, glass, cement, concrete, ceramics or like inorganic materials, polyester, polypropylene, acryl, vinyl chloride, polycarbonate, polyethylene or like resins, wood, or paper. The coating composition of the invention may be directly applied to these substrates or to at least one undercoat layer of the type commonly formed in the art, e.g. from a wash primer, an anti-corrosive coating material, an epoxy resin coating material, acryl or a polyester resin coating material,. To any of these substrates the coating composition of the invention can be easily applied, because it has an excellent coating amenability.

Examples

Preparation Example 1

Preparation of fluorine-type copolymer

A 3.5-liter autoclave was charged with 700 g of water, 1180 g of 1,2-dichloro-1,1,2,2-tetrafluoroethane and 5 g of ethyl acetate as a chain transfer agent. The autoclave was subjected to nitrogen replacement and was further charged with 75.2 g of vinylidene fluoride (VdF), 10.6 g of tetrafluoroethylene (TFE) and 1.5 g of chlorotrifluoroethylene (CTFE). The contents in the autoclave were heated to 40°C and sufficietly stirred and 2.5 g of diisopropylperoxydicarbonate was added thereto to initiate a polymerization. Throughout the polymerization, a mixture of VdF, TFE and CTFE (in a ratio of 80 : 15 : 5 (mole %)) was fed to the reaction system so that the polymerization was conducted under a pressure of 8.0 kg/cm$^2$G for 12 hours. The copolymerization thus obtained was collected and dried under reduced pressure at 80°C, giving 200 g of a copolymer. From the result of NMR spectrum analysis, the copolymer was found to contain VdF, TFE and CTFE in a ratio of 81 : 14 : 5 and have a melting point (Tm) of 125°C and an inherent viscosity [$\eta$] = 0.79 (DMF, at 35°C).

Preparation Examples 2 to 11

Copolymers each having the composition shown below in Table 1 were prepared in the same manner as in Preparation Example 1.

Table 1

| Preparation Example | VdF mole % | TFE mole % | CTFE mole % | Other monomers mole % | Tm (°C) | $[\eta]$ |
|---|---|---|---|---|---|---|
| 2 | 80 | 10 | 10 | – | 95 | 0.56 |
| 3 | 70 | 20 | 10 | – | 110 | 0.42 |
| 4 | 80 | 10 | 5 | TrFE 5 | 123 | 0.61 |
| 5 | 80 | 15 | 5 | – | 123 | 0.28 |
| 6 | 60 | 25 | 15 | – | 102 | 0.59 |
| 7 | 75 | 14 | 11 | – | 110 | 0.36 |
| 8 | 70 | 18 | 12 | – | 104 | 0.34 |
| 9 | 80 | 14 | 5.5 | HFP 0.5 | 118 | 0.35 |
| 10 | 72 | 16 | 9.5 | HFP 2.5 | 90 | 0.34 |
| 11 | 79 | 13 | 8 | – | 100 | 0.36 |

Preparation Example 12

A 3-liter autoclave was charged with 1500 g of water and 3 g of Unidyne DS-101 (product of Daikin Kogyo Co., Ltd.) as an emulsifier, followed by deaeration and nitrogen replacement. Thereafter a monomeric mixture of VdF, TFE and CTFE (in a ratio of 73 : 14 : 13 (mole %)) was fed to the autoclave and the pressure in the autoclave was adjusted to kg/cm$^2$G at 39 °C. A 3.5 g quantity of diisopropylperoxydicarbonate was added with stirring to initiate a polymerization. The polymerization was conducted for 8 hours while the monomeric mixture was continuously fed to the reaction system so that the polymerization

6

proceeded under a pressure of 20 kg/cm$^2$G. The dispersion thus obtained was coagulated by freezing and washed with water to eliminate the emulsifier. Thereafter the resulting coagulum was dried at 80°C under reduced pressure, giving 270 g of a copolymer. From the results of elemental analysis, the copolymer was found to contain VdF, TFE and CTFE in a ratio of 74 : 14 : 12 and have a melting point (Tm) of 108°C and an inherent viscosity [$\eta$] = 0.690 (DMF, at 35°C).

Solubility test

The copolymers obtained in Preparation Examples 1 to 11 were each dissolved in the organic solvents as shown below in Table 2 by heating at 60°C for 3 hours so that the resulting solution contained the copolymer in an amount of 50% by weight. The solution was left to stand at room temperature for 1 week and observed. The solubility of each solution was evaluated according to the following criteria.
A : the copolymer was dissolved in the solvent and the solution had fluidity after left to stand for 1 week
B : the copolymer was dissolved in the solvent but the solution gelled without exibiting fluidity after left to stand for 1 week
C : the copolymer was not dissolved in the solvent Table 2 shows the test results.

Table 2

| Copolymer | MEK | MIBK | BuAc | McAc/MEK |
|---|---|---|---|---|
| Preparation Example 1 | B | B | C | B |
| Preparation Example 2 | A | A | A | A |
| Preparation Example 3 | A | A | A | A |
| Preparation Example 4 | A | A | A | A |
| Preparation Example 5 | B | B | C | B |
| Preparation Example 6 | B | C | C | B |
| Preparation Example 7 | A | A | A | A |
| Preparation Example 8 | A | A | A | A |
| Preparation Example 9 | A | B | C | A |
| Preparation Example 10 | A | A | A | A |
| Preparation Example 11 | A | A | B | A |
| Preparation Example 12 | A | A | A | A |

The abbreviated words in Table 2 are as follows.
MEK : methyl ethyl ketone
MIBK : methyl isobutyl ketone
BuAc : n-butyl acetate
McAc/MEK : methyl cellosolve acetate/methyl ethyl ketone = 3/7 (ratio by weight)

Test for compatibility with acrylic resins

A 1 part by weight quantity of a solution of 20 wt.% of each of the following acrylic resins in MIBK was mixed with 2 parts by weight of a solution of 20 wt.% of each of the copolymers obtained in Preparation Examples 1, 2, 5 to 11 in MEK. The mixture was casted on a sheet material made of polyethylene terephthalate (PET) and the coat formed on the sheet material was observed and evaluated for blushing (white turbidity) with the unaided eye. The evaluation was conducted according to the following criteria.
A : A clear coat was obtained
B : A coat showing a slight degree of blushing was obtained
C : A coat showing a significant degree of blushing was obtained
Table 3 shows the results.

EP 0 422 684 B1

| Acrylic resins | | | |
|---|---|---|---|
| No. | Composition (molar ratio) | Tg °C | $[\eta]$ |
| 1 | PMMA | 105 | 0.240 |
| 2 | MMA/EMA (93/7) | 100 | 0.264 |
| 3 | MMA/EA (67/33) | 60 | 0.288 |
| 4 | MMA/BMA (50/50) | 50 | 0.187 |
| 5 | EMA/MA (43/57) | 40 | 0.294 |
| 6 | PIBMA | 50 | 0.163 |

Table 3

| Copolymer | Acrylic resin (No.) | | | | | |
|---|---|---|---|---|---|---|
| | 1 | 2 | 3 | 4 | 5 | 6 |
| Preparation Example 1 | B | C | B | B | B | B |
| Preparation Example 2 | B | B | A | B | A | A |
| Preparation Example 5 | B | C | B | B | B | B |
| Preparation Example 6 | C | C | C | B - C | B - C | B - C |
| Preparation Example 7 | A | A | A | B | A | A |
| Preparation Example 8 | B | B | A | B | A | A |
| Preparation Example 9 | A | A | A | A | A | A |
| Preparation Example 10 | A | B | A | B | A | A |
| Preparation Example 11 | B | B | B | B | B | B |

Comparative Preparation Examples 1 and 2

Copolymers each having the composition as shown below in Table 4 were prepared in the same manner as in Preparation Example 1.

Table 4

| Comp. Prep. Ex. | VdF | TFE | HFP | Tm | $[\eta]$ |
|---|---|---|---|---|---|
| 1 | 80 | 20 | - | 140 | 0.81 |
| 2 | 77 | 17 | 6 | 76 | 0.49 |

Examples 1 to 12

There were obtained 20% solutions of each of the fluorine-type copolymers prepared in Preparation Examples 1 to 12 in MIBK. An aluminum plate (after BT712 treat-ment, product of Nippon Test Panel Co., Ltd.) on which a base coating composition (trade name: "Hypon 20 ace", dry film thickness of 45 μm, product of Nippon Paint Co, Ltd.) was applied was coated with each solution obtained above using a brush. The coated aluminum plates were dried at 25°C for 1 day, giving coats having a dry film thickness of 25 μm. The coated aluminum plates thus obtained were subjected to the following tests as test specimens (test panels). Table 5 below shows the results.

8

Comparison Example 1

An attempt was made to prepare a 20% solution of the copolymer obtained in Comparative Preparation Example 1 in MIBK. However, the copolymer was not dissolved in MIBK.

Further, a 20% solution of the copolymer in acetone was prepared. However, a coat formed from the solution by the same procedure as in Examples 1 to 12 exhibited blush-ing.

Comparison Example 2

A coat was produced from the copolymer obtained in Comparative Preparation Example 2 by the same procedure as in Examples 1 to 12. The coated plate obtained was subjected to the following performance tests as a specimen (test panel). Table 5 below shows the results.

Examples 13 to 18

A 20 parts by weight quantity of each of the 20% solutions obtained in Examples 2, 4, 7 to 10 was mixed for 2 hours with 15 parts by weight of a 20% solution of MMA/EA (= 67/33 mole %) in 20 wt.% n-butyl acetate with use of a paint shaker (product of Toyo Seiki Seisakusyo Co., Ltd.). Thereafter each solution was applied with a brush to the aluminum plate treated in the same manner as in Examples 1 to 12. The coated aluminum plates were dried at 25°C for 1 day, giving coats having a dry film thickness of 25 μm. The aluminum plates thus obtained were each subjected to the following performance tests as a specimen (test panel). Table 6 below shows the test results.

Comparison Examples 3 to 7

Coats were prepared by the same procedure as in Examples 13 to 18 using the solutions obtained in Examples 1, 4, 5, 6 and 11 and Comparison Example 2. The coated plates obtained were each subjected to the following performance tests as a specimen (test panel). Table 7 below shows the results.

Performance tests

Pencil hardness : The pencil hardness of the specimen was evaluated according to the method of JIS K 5400.

Adhesion : The coat surface was cut crosswise with a knife to form 100 squares each having a size of 1 mm x 1 mm. A cellophane adhesive tape was adhered to the cut coat surface and peeled therefrom. This adhering-peeling procedure was repeated 10 times. The number of the squares remained unpeeled from the test panel was determined.

Glossiness : The glossiness on mirror surface inclined at an angle of 60° as described in JIS K 5400 was determined.

Gloss retentivity : The specimen was exposed for 4000 hours with use of a sunshine-weather-O-meter (manufactured by Suga Tester Co., Ltd.) under the following conditions: rain cycle of 18 min/120 min, humidity of 60% and the temperature of black panel of 63°C. Gloss retentivity was determined from the values of glossiness before and after the exposure.

Staining resistance : The test panel was attached to a wall near a road where congested vehicular traffic was found and was left to stand for 3 months. Thereafter the test panel was detached from the wall, washed with water, observed and evaluated for the degree of staining with the unaided eye. The evaluation was conducted according to the following criteria.

A : Substantially no staining

B : Stained to a slight extent

C : Stained to a considerable extent

Table 5

| Example | Copolymer | Pencil Hardness | Adhesion | Glossiness | Gloss retentivity | Staining resistance |
|---|---|---|---|---|---|---|
| 1 | Prep. Ex. 1 | B | 100 | 72 | 96 | A |
| 2 | Prep. Ex. 2 | 2B | 100 | 76 | 95 | A |
| 3 | Prep. Ex. 3 | 2B | 100 | 75 | 94 | A |
| 4 | Prep. Ex. 4 | B | 100 | 73 | 91 | A |
| 5 | Prep. Ex. 5 | B | 100 | 72 | 96 | A |
| 6 | Prep. Ex. 6 | 2B | 100 | 77 | 95 | A |
| 7 | Prep. Ex. 7 | 2B | 100 | 73 | 96 | A |
| 8 | Prep. Ex. 8 | 2B | 100 | 72 | 95 | A |
| 9 | Prep. Ex. 9 | B | 100 | 74 | 95 | A |
| 10 | Prep. Ex. 10 | 2B | 100 | 76 | 96 | A |
| 11 | Prep. Ex. 11 | 2B | 100 | 72 | 93 | A |
| 12 | Prep. Ex. 12 | 2B | 100 | 71 | 90 | A |
| Comp.Ex. 2 | Comp. Prep. Ex. 2 | 5B | 100 | 70 | 93 | B |

Table 6

| Example | Copolymer | Pencil Hardness | Adhesion | Glossiness | Gloss retentivity | Staining resistance |
|---|---|---|---|---|---|---|
| 13 | Prep. Ex. 2 | H | 100 | 80 | 93 | A |
| 14 | Prep. Ex. 4 | H | 100 | 74 | 85 | A |
| 15 | Prep. Ex. 7 | H | 100 | 81 | 90 | A |
| 16 | Prep. Ex. 8 | H | 100 | 80 | 91 | A |
| 17 | Prep. Ex. 9 | H | 100 | 75 | 87 | A |
| 18 | Prep. Ex. 10 | H | 100 | 78 | 93 | A |

Table 7

| Comp. Example | Copolymer | Pencil Hardness | Adhesion | Glossiness | Gloss retentivity | Staining resistance |
|---|---|---|---|---|---|---|
| 3 | Comp.Prep.Ex. 1 | H | 100 | 45 | 65 | A |
| 4 | Comp.Prep.Ex. 5 | H | 100 | 42 | 65 | A |
| 5 | Comp.Prep.Ex. 6 | H | 100 | 35 | 45 | B |
| 6 | Comp.Prep.Ex. 11 | H | 100 | 60 | 82 | A |
| 7 | Comp.Prep.Ex. 2 | B | 100 | 75 | 89 | B |

**Claims**

1.  A coating composition prepared by dissolving a fluorine-type copolymer in an organic solvent, the copolymer comprising:

i) 50 to 90 mole% of a structural unit represented by the formula a)

-$CH_2$-$CF_2$-

ii) 5 to 30 mole% of a structural unit represented by the formula b)

-$CF_2$-$CF_2$-

and

iii) 5 to 30 mole% of a structural unit represented by the formula c)

-$CF_2$-CFCl-

2. A coating composition according to claim 1 wherein the fluorine-type copolymer comprises 70 to 85 mole% of the structural unit a), 10 to 20 mole% of the structural unit b) and 5 to 15 mole% of the structural unit c).

3. A coating composition according to claim 1 wherein the fluorine-type copolymer has an intrinsic viscosity of 0.15 to 0.80 in dimethylformamide at 35°C.

4. A coating composition according to claim 1 wherein the organic solvent is at least one species selected from ketones and esters which have a boiling point of 60 to 250°C.

5. A coating composition according to claim 1 wherein the organic solvent is at least one species selected from of acetone, methyl ethyl ketone, methyl isobutyl ketone, cyclohexanone, ethyl acetate, n-butyl acetate and methyl acetate cellosolve.

6. A coating composition according to claim 1 wherein the fluorine-type copolymer is used in an amount of 5 to 50% by weight based on the combined amount of the copolymer and the organic solvent.

7. A coating composition according to claim 1 wherein the fluorine-type copolymer is used in an amount of 30 to 50% by weight based on the combined amount of the copolymer and the organic solvent.

8. A coating composition prepared by dissolving a fluorine-type copolymer and a thermoplastic acrylic resin in an organic solvent, the copolymer comprising:
   i) 70 to 80,5 mole% of a structural unit represented by the formula a)

-$CH_2$-$CF_2$-

ii) 10 to 20 mole% of a structural unit represented by the formula b)

-$CF_2$-$CF_2$-

and

iii) 9.5 to 15 mole% of a structural unit represented by the formula c)

-$CF_2$-CFCl-

9. A coating composition according to claim 8 wherein the thermoplastic acrylic resin is at least one species selected from methyl methacrylate, ethyl methacrylate, n-butyl methacrylate, isobutyl methacrylate, methyl acrylate and ethyl acrylate.

10. A coating composition according to claim 8 wherein the thermoplastic acrylic resin has an intrinsic viscosity of 0.05 to 0.50 in dimethylformamide at 35°C.

11. A coating composition according to claim 8 wherein the thermoplastic acrylic resin has an intrinsic viscosity of 0.15 to 0.80 in dimethylformamide at 35°C.

EP 0 422 684 B1

**12.** A coating composition according to claim 8 wherein the thermoplastic acrylic resin is used in an amount of 10 to 1,900 parts by weight per 100 parts by weight of the fluorine-type copolymer.

**13.** A coating composition according to claim 8 wherein the thermoplastic acrylic resin is used in an amount of 10 to 400 parts by weight per 100 parts by weight of the fluorine-type copolymer.

**14.** A coating composition according to claim 8 wherein the organic solvent is at least one species selected from ketones and esters which have a boiling point of 60 to 250°C.

**15.** A coating composition according to claim 8 wherein the organic solvent is at least one species selected from acetone, methyl ethyl ketone, methyl isobutyl ketone, cyclohexanone, ethyl acetate, n-butyl acetate and methyl acetate cellosolve.

**16.** A coating composition according to claim 8 wherein the fluorine-type copolymer and the thermoplastic acrylic resin are used in an amount of 5 to 50% by weight based on the weight of the composition.

**17.** A coating composition according to claim 8 wherein the fluorine-type copolymer and the thermoplastic acrylic resin are used in an amount of 30 to 50% by weight based on the weight of the composition.

**18.** A coating composition prepared by dissolving a fluorine-type copolymer in an organic solvent, the copolymer comprising:

i) 50 to 89,9 mole% of a structural unit represented by the formula a)

$-CH_2-CF_2-$

ii) 5 to 30 mole% of a structural unit represented by the formula b)

$-CF_2-CF_2-$

iii) 5 to 30 mole% of a structural unit represented by the formula c)

$-CF_2-CFCl-$

and

iv) 0.1 to 10 mole% of a fluoroolefin-structural unit d).

**19.** A coating composition according to claim 18 wherein the fluorine-type copolymer comprises 70 to 84,9 mole% of the structural unit a), 10 to 20 mole% of the structural unit b), 5 to 15 mole% of the structural unit c) and 0.1 to 10 mole% of the structural unit d).

**20.** A coating composition according to claim 18 wherein the fluoroolefin is one selected from trifluoroethylene vinyl fluoride, hexafluoropropylene, and perfluoro(alkyl vinyl ether).

**21.** A coating composition according to claim 18 wherein the fluorine-type copolymer has an intrinsic viscosity of 0.15 to 0.80 in dimethylformamide at 35°C.

**22.** A coating composition according to claim 18 wherein the organic solvent is at least one species selected from ketones and esters which have a boiling point of 60 to 250°C.

**23.** A coating composition according to claim 18 wherein the organic solvent is at least one species selected from acetone, methyl ethyl ketone, methyl isobutyl ketone, cyclohexanone, ethyl acetate, n-butyl acetate and methyl acetate cellosolve.

**24.** A coating composition according to claim 18 wherein the fluorine-type copolymer is used in an amount of 5 to 50% by weight based on the combined amount of the copolymer and the organic solvent.

**25.** A coating composition according to claim 18 wherein the fluorine-type copolymer is used in an amount of 30 to 50% by weight based on the combined amount of the copolymer and the organic solvent.

14

**26.** A coating composition prepared by dissolving a fluorine-type copolymer and a thermoplastic acrylic resin in an organic solvent, the copolymer comprising:
   i) 70 to 84,9 mole% of a structural unit represented by the formula a)

$-CH_2-CF_2-$

   ii) 10 to 20 mole% of a structural unit represented by the formula b)

$-CF_2-CF_2-$

   iii) 5 to 15 mole% of a structural unit represented by the formula c)

$-CF_2-CFCl-$

   and
   iv) 0.1 to 10 mole% of a fluoroolefin-structural unit d).

**27.** A coating composition according to claim 26 wherein the fluorine-type copolymer comprises 70 to 80 mole% of the structural unit a), 10 to 20 mole% of the structural unit b), 9.5 15 mole% of the structural unit c) and 0.5 to 5 mole% of the structural unit d).

**28.** A coating composition according to claim 26 wherein the fluoroolefin is one selected from trifluoroethylene, vinyl fluoride, hexafluoropropylene and perfluoro(alkyl vinyl ether).

**29.** A coating composition according to claim 26 wherein the thermoplastic acrylic resin is at least one species selected from methyl methacrylate, ethyl methacrylate, n-butyl methacrylate, isobutyl methacrylate, methyl acrylate and ethyl acrylate.

**30.** A coating composition according to claim 26 wherein the thermoplastic acrylic resin has an intrinsic viscosity of 0.05 to 0.50 in dimethylformamide at 35°C.

**31.** A coating composition according to claim 26 wherein the thermoplastic acrylic resin has an intrinsic viscosity of 0.15 to 0.80 in dimethylformamide at 35°C.

**32.** A coating composition according to claim 26 wherein the thermoplastic acrylic resin is used in an amount of 10 to 1,900 parts by weight per 100 parts by weight of the fluorine-type copolymer.

**33.** A coating composition according to claim 26 wherein the thermoplastic acrylic resin is used in an amount of 10 to 400 parts by weight per 100 parts by weight of the fluorine-type copolymer.

**34.** A coating composition according to claim 26 wherein the organic solvent is at least one species selected from ketones and esters which have a boiling point of 60 to 250°C.

**35.** A coating composition according to claim 26 wherein the organic solvent is at least one species selected from acetone, methyl ethyl ketone, methyl isobutyl ketone, cyclohexanone, ethyl acetate, n-butyl acetate and methyl acetate cellosolve.

**36.** A coating composition according to claim 26 wherein the fluorine-type copolymer and the thermoplastic acrylic resin are used in an amount of 5 to 50% by weight based on the weight of the composition.

**37.** A coating composition according to claim 26 wherein the fluorine-type copolymer and the thermoplastic acrylic resin are used in an amount of 30 to 50% by weight based on the weight of the composition.

**Patentansprüche**

**1.** Beschichtungszusammensetzung, die hergestellt ist durch Auflösen eines fluorartigen Copolymeren in einem organischen Lösungsmittel, wobei das Copolymer umfaßt:

EP 0 422 684 B1

i) 50 bis 90 Mol-% einer Struktureinheit, die repräsentiert wird durch die Formel a)

-CH$_2$-CF$_2$-

ii) 5 bis 30 Mol-% einer Struktureinheit, die repräsentiert wird durch die Formerl b)

-CF$_2$-CF$_2$-

und

iii) 5 bis 30 Mol-% einer Struktureinheit, die repräsentiert wird durch die Formel c)

-CF$_2$-CFCl- .

**2.** Beschichtungszusammensetzung nach Anspruch 1, worin das fluorartige Copolymer umfaßt: 70 bis 85 Mol-% der Struktureinheit a), 10 bis 20 Mol-% der Struktureinheit b) und 5 bis 15 Mol-% der Struktureinheit c).

**3.** Beschichtungszusammensetzung nach Anspruch 1, worin das fluorartige Copolymer eine grundmolare Viskosität von 0,15 bis 0,80 in Dimethylformamid bei 35°C aufweist.

**4.** Beschichtungszusammensetzung nach Anspruch 1, worin das organische Lösungsmittel wenigstens ein solches ist, von der Art, ausgewählt aus Ketonen und Estern, die einen Siedepunkt von 60 bis 250°C aufweisen.

**5.** Beschichtungszusammensetzung nach Anspruch 1, worin das organische Lösungsmittel wenigstens ein solches ist, von der Art, ausgewählt aus Aceton, Methylethylketon, Methylisobutylketon, Cyclohexanon, Ethylacetat, n-Butylacetat und Methyacetatcellosolve.

**6.** Beschichtungszusammensetzung nach Anspruch 1, worin das fluorartige Copolymer in einer Menge von 5 bis 50 Gew.-%, bezogen auf die kombinierte Menge von Copolymer und organischem Lösungsmittel verwendet wird.

**7.** Beschichtungszusammensetzung nach Anspruch 1, worin das fluorartige Copolymer in einer Menge von 30 bis 50 Gew.-%, bezogen auf die kombinierte Menge von Copolymer und organischem Lösungsmittel verwendet wird.

**8.** Beschichtungszusammensetzung, die hergestellt ist durch Auflösen eines fluorartigen Copolymeren und eines thermoplastischen Acrylharzes in einem organischen Lösungsmittel, wobei das Copolymer umfaßt:

i) 70 bis 80,5 Mol-% einer Struktureinheit, die durch die Formel a)

-CH$_2$CF$_2$-

repräsentiert wird,

ii) 10 bis 20 Mol-% einer Struktureinheit, die durch die Formel b)

-CF$_2$-CF$_2$-

repräsentiert wird

und

iii) 9,5 bis 15 Mol-% einer Struktureinheit, die durch die Formel c)

-CF$_2$-CFCl-

repräsentiert wird.

**9.** Beschichtungszusammensetzung nach Anspruch 8, worin das thermoplastische Acrylharz wenigstens eine Art ist, die ausgewählt ist aus Methylmethacrylat, Ethyl-methacrylat, n-Butylmethacrylat, Isobütyl-

16

methacrylat, Methylacrylat und Ethylacrylat.

10. Beschichtungszusammensetzung nach Anspruch 8, worin das thermoplastische Acrylharz in Dimethylformamid bei 35°C eine grundmolare Viskositätszahl von 0,05 bis 0,50 aufweist.

11. Beschichtungszusammensetzung nach Anspruch 8, worin das thermoplastische Acrylharz in Dimethylformamid bei 35°C eine grundmolare Viskositätszahl von 0,15 bis 0,80 aufweist.

12. Beschichtungszusammensetzung nach Anspruch 8, worin das thermoplastische Acrylharz in einer Menge von 10 bis 1.900 Gewichtsteilen pro 100 Gewichtsteile des fluorartigen Copolymeren verwendet wird.

13. Beschichtungszusammensetzung nach Anspruch 8, worin das thermoplastische Acrylharz in einer Menge von 10 bis 400 Gewichtsteilen pro 100 Gewichtsteile des fluorartigen Copolymeren verwendet wird.

14. Beschichtungszusammensetzung nach Anspruch 8, worin das organische Lösungsmittel wenigstens ein solches von der Art ist, ausgewählt aus Ketonen und Estern, die einen Siedepunkt von 60 bis 250°C aufweisen.

15. Beschichtungszusammensetzung nach Anspruch 8, worin das organische Lösungsmittel wenigstens ein solches von der Art ist, ausgewählt aus Aceton, Methylethylketon, Methylisobutylketon, Cyclohexanon, Ethylacetat, n-Butylacetat und Methylacetatcellosolve.

16. Beschichtungszusammensetzung nach Anspruch 8, worin das fluorartige Copolymer und das thermoplastische Acrylharz in einer Menge von 5 bis 50 Gew.-% bezogen auf das Gewicht der Zusammensetzung verwendet worden sind.

17. Beschichtungszusammensetzung nach Anspruch 8, worin das fluorartige Copolymer und das thermoplastische Acrylharz in einer Menge von 30 bis 50 Gew.-% bezogen auf das Gewicht der Zusammensetzung verwendet worden sind.

18. Beschichtungszusammensetzung, die durch Auflösen eines fluorartigen Copolymeren in einem organischen Lösungsmittel hergestellt worden ist, wobei das Copolymer umfaßt:
   i) 50 bis 89,9 Mol-% einer Struktureinheit, die durch die Formel a)

   $-CH_2-CF_2-$

   repräsentiert wird,
   ii) 5 bis 30 Mol-% einer Struktureinheit, die durch die Formel b)

   $-CF_2-CF_2-$

   repräsentiert wird,
   iii) 5 bis 30 Mol-% einer Struktureinheit, die durch die Formel c)

   $-CF_2-CFCl-$

   repräsentiert wird
   und
   iv) 0,1 bis 10 Mol-% einer Fluorolefin-Struktureinheit d).

19. Beschichtungszusammensetzung nach Anspruch 18, worin das fluorartige Copolymer umfaßt: 70 bis 84,9 Mol-% der Struktureinheit a), 10 bis 20 Mol-% der Struktureinheit b), 5 bis 15 Mol-% der Struktureinheit c) und 0,1 bis 10 Mol-% der Struktureinheit d).

20. Beschichtungszusammensetzung nach Anspruch 18, worin das Fluorolefin ausgewählt ist aus Trifluorethylen, Vinylfluorid, Hexafluorpropylen und Perfluor(alkylvinylether).

**21.** Beschichtungszusammensetzung nach Anspruch 18, worin das fluorartige Copolymer in Dimethylformamid bei 35°C eine grundmolare Viskositätszahl von 0,15 bis 0,80 aufweist.

**22.** Beschichtungszusammensetzung nach Anspruch 18, worin das organische Lösungsmittel wenigstens ein solches von der Art ist, ausgewählt aus Ketonen und Estern mit einem Siedepunkt von 60 bis 250°C.

**23.** Beschichtungszusammensetzung nach Anspruch 18, worin das organische Lösungsmittel wenigstens ein solches von der Art ist, ausgewählt aus Aceton, Methylethylketon, Methylisobutylketon, Cyclohexanon, Ethylacetat, n-Butylacetat und Methylacetatcellosolve.

**24.** Beschichtungszusammensetzung nach Anspruch 18, worin das fluorartige Copolymer in einer Menge von 5 bis 50 Gew.-%, bezogen auf die kombinierte Menge des Copolymeren und des organischen Lösungsmittels verwendet worden ist.

**25.** Beschichtungszusammensetzung nach Anspruch 18, worin das fluorartige Copolymer in einer Menge von 30 bis 50 Gew.-%, bezogen auf die kombinierte Menge des Copolymeren und des organischen Lösungsmittels verwendet worden ist.

**26.** Beschichtungszusammensetzung, die hergestellt ist durch Auflösen von einem fluorartigen Copolymer und einem thermoplastischen Acrylharz in einem organischen Lösungsmittel, wobei das Copolymer umfaßt:

i) 70 bis 84,9 Mol-% einer Struktureinheit, die durch die Formel a)

$-CH_2-CF_2-$

repräsentiert wird,

ii) 10 bis 20 Mol-% einer Struktureinheit, die durch die Formel b)

$-CF_2-CF_2-$

repräsentiert wird,

iii) 5 bis 15 Mol-% einer Struktureinheit, die durch die Formel c)

$-CF_2-CFCl-$

repräsentiert wird
und
iv) 0,1 bis 10 Mol-% einer Fluorolefin-Struktureinheit d).

**27.** Beschichtungszusammensetzung nach Anspruch 26, worin das fluorartige Copolymer 70 bis 80 Mol-% der Struktureinheit a), 10 bis 20 Mol-% der Struktureinheit b), 9,5 bis 15 Mol-% der Struktureinheit c) und 0,5 bis 5 Mol-% der Struktureinheit d) umfaßt.

**28.** Beschichtungszusammensetzung nach Anspruch 26, worin das Fluorolefin ein solches ist, ausgewählt aus Trifluorethylen, Vinylfluorid, Hexafluorpropylen und Perfluor(alkylvinylether).

**29.** Beschichtungszusammensetzung nach Anspruch 26, worin das thermoplastische Acrylharz wenigstens ein solches von der Art ist, ausgewählt aus Methylmethacrylat, Ehtylmethacrylat, n-Butylmethacrylat, Isobutylmethacrylat, Methylacrylat und Ethylacrylat.

**30.** Beschichtungszusammensetzung nach Anspruch 26, worin das thermoplastische Acrylharz in Dimethylformamid bei 35°C eine grundmolare Viskositätszahl von 0,05 bis 0,50 aufweist.

**31.** Beschichtungszusammensetzung nach Anspruch 26, worin das thermoplastische Acrylharz in Dimethylformamid bei 35°C eine grundmolare Viskositätszahl von 0,15 bis 0,80 aufweist.

**32.** Beschichtungszusammensetzung nach Anspruch 26, worin das thermoplastische Acrylharz in einer Menge von 10 bis 1.900 Gewichtsteilen pro 100 Gewichtsteile des fluorartigen Copolymeren verwendet wird.

**33.** Beschichtungszusammensetzung nach Anspruch 26, worin das thermoplastische Acrylharz in einer Menge von 10 bis 400 Gewichtsteilen pro 100 Gewichtsteile des fluorartigen Copolymeren verwendet wird.

**34.** Beschichtungszusammensetzung nach Anspruch 26, worin das organische Lösungsmittel wenigstens eines von der Art ist, die ausgewählt ist aus Ketonen und Estern, die einen Siedepunkt von 60 bis 250°C aufweisen.

**35.** Beschichtungszusammensetzung nach Anspruch 26, worin das organische Lösungsmittel wenigstens eines von der Art ist, das ausgewählt ist aus Aceton, Methylethylketon, Methylisobutylketon, Cyclohexanon, Ethylacetat, n-Butylacetat und Methylacetatcellosolve.

**36.** Beschichtungszusammensetzung nach Anspruch 26, worin das fluorartige Copolymer und das thermoplastische Acrylharz in einer Menge von 5 bis 50 Gew.-% bezogen auf das Gewicht der Zusammensetzung verwendet worden sind.

**37.** Beschichtungszusammensetzung nach Anspruch 26, worin das fluorartige Copolymer und das thermoplastische Acrylharz in einer Menge von 30 bis 50 Gew.-% bezogen auf das Gewicht der Zusammensetzung verwendet worden sind.

## Revendications

**1.** Composition de revêtement préparée par dissolution d'un copolymère de type fluor dans un solvant organique, le copolymère comprenant:

(i) 50 à 90% en moles d'une unité structurale représentée par la formule (a) :

$-CH_2-CF_2-$

(ii) 5 à 30% en moles d'une unité structurale représentée par la formule (b) :

$-CF_2-CF_2-$

et

(iii) 5 à 30% en moles d'une unité structurale représentée par la formule (c) :

$-CF_2-CFCl-$

**2.** Composition de revêtement suivant la revendication 1, dans laquelle le copolymère de type fluor comprend 70 à 85% en moles de l'unité structurale (a), 10 à 20% en moles de l'unité structurale (b) et 5 à 15% en moles de l'unité structurale (c).

**3.** Composition de revêtement suivant la revendication 1, dans laquelle le copolymère de type fluor a une viscosité intrinsèque de 0,15 à 0,80 dans du diméthylformamide à 35°C.

**4.** Composition de revêtement suivant la revendication 1, dans laquelle le solvant organique est au moins une espèce sélectionnée parmi des cétones et des esters qui ont un point d'ébullition de 60 à 250°C.

**5.** Composition de revêtement suivant la revendication 1, dans laquelle le solvant organique est au moins une espèce sélectionnée parmi l'acétone, la méthyl éthyl cétone, la méthyl isobutyl cétone, la cyclohexanone, l'acétate d'éthyle, l'acétate de n-butyle et l'acétate de méthyl cellosolve.

**6.** Composition de revêtement suivant la revendication 1, dans laquelle le copolymère de type fluor est utilisé en une quantité de 5 à 50% en poids par rapport à la quantité combinée du copolymère et du solvant organique.

**7.** Composition de revêtement suivant la revendication 1, dans laquelle le copolymère de type fluor est utilisé en une quantité de 30 à 50% en poids par rapport à la quantité combinée du copolymère et du solvant organique.

**8.** Composition de revêtement préparée par dissolution d'un copolymère de type fluor et d'une résine acrylique thermoplastique dans un solvant organique, le copolymère comprenant:

(i) 70 à 80,5% en moles d'une unité structurale représentée par la formule (a) :

$-CH_2-CF_2-$

(ii) 10 à 20% en moles d'une unité structurale représentée par la formule (b) :

$-CF_2-CF_2-$

et

(iii) 9,5 à 15% en moles d'une unité structurale représentée par la formule (c) :

$-CF_2-CFCl-$

**9.** Composition de revêtement suivant la revendication 8, dans laquelle la résine acrylique thermoplastique est au moins une espèce sélectionnée parmi le méthacrylate de méthyle, le méthacrylate d'éthyle, le méthacrylate de n-butyle, le méthacrylate d'isobutyle, l'acrylate de méthyle et l'acrylate d'éthyle.

**10.** Composition de revêtement suivant la revendication 8, dans laquelle la résine acrylique thermoplastique a une viscosité intrinsèque de 0,05 à 0,50 dans le diméthylformamide à 35°C.

**11.** Composition de revêtement suivant la revendication 8, dans laquelle la résine acrylique thermoplastique a une viscosité intrinsèque de 0,15 à 0,80 dans le diméthylformamide à 35°C.

**12.** Composition de revêtement suivant la revendication 8, dans laquelle la résine acrylique thermoplastique est utilisée en une quantité de 10 à 1.900 parties en poids pour 100 parties en poids du copolymère de type fluor.

**13.** Composition de revêtement suivant la revendication 8, dans laquelle la résine acrylique thermoplastique est utilisée en une quantité de 10 à 400 parties en poids pour 100 parties en poids du copolymère de type fluor.

**14.** Composition de revêtement suivant la revendication 8, dans laquelle le solvant organique est au moins une espèce sélectionnée parmi des cétones et des esters qui ont un point d'ébullition de 60 à 250°C.

**15.** Composition de revêtement suivant la revendication 8, dans laquelle le solvant organique est au moins une espèce sélectionnée parmi l'acétone, la méthyl éthyl cétone, la méthyl isobutyl cétone, la cyclohexanone, l'acétate d'éthyle, l'acétate de n-butyle et l'acétate de méthyl cellosolve.

**16.** Composition de revêtement suivant la revendication 8, dans laquelle le copolymère de type fluor et la résine acrylique thermoplastique sont utilisés en une quantité de 5 à 50% en poids par rapport au poids de la composition.

**17.** Composition de revêtement suivant la revendication 8, dans laquelle le copolymère de type fluor et la résine acrylique thermoplastique sont utilisés en une quantité de 30 à 50% en poids par rapport au poids de la composition.

**18.** Composition de revêtement préparée par dissolution d'un copolymère de type fluor thermoplastique dans un solvant organique, le copolymère comprenant:

(i) 50 à 89,5% en moles d'une unité structurale représentée par la formule (a) :

$-CH_2-CF_2-$

(ii) 5 à 30% en moles d'une unité structurale représentée par la formule (b) :

$-CF_2-CF_2-$

(iii) 5 à 30% en moles d'une unité structurale représentée par la formule (c) :

$-CF_2-CFCl-$

et

(iv) 0,1 à 10% en moles d'une unité structurale (d) de fluorooléfine.

19. Composition de revêtement suivant la revendication 18, dans laquelle le copolymère de type fluor comprend 70 à 84,9% en moles de l'unité structurale (a), 10 à 20% en moles de l'unité structurale (b), 5 à 15% en moles de l'unité structurale (c) et 0,1 à 10% en moles de l'unité structurale (d).

20. Composition de revêtement suivant la revendication 18, dans laquelle la fluorooléfine est choisie parmi le trifluoroéthylène, le fluorure de vinyle, l'hexafluoropropylène et un perfluoro(éther vinylique d'alkyle).

21. Composition de revêtement suivant la revendication 18, dans laquelle le copolymère de type fluor a une viscosité intrinsèque de 0,15 à 0,80 dans du diméthylformamide à 35°C.

22. Composition de revêtement suivant la revendication 18, dans laquelle le solvant organique est au moins une espèce sélectionnée parmi des cétones et des esters qui ont un point d'ébullition de 60 à 250°C.

23. Composition de revêtement suivant la revendication 18, dans laquelle le solvant organique est au moins une espèce sélectionnée parmi l'acétone, la méthyl éthyl cétone, la méthyl isobutyl cétone, la cyclohexanone, l'acétate d'éthyle, l'acétate de n-butyle et l'acétate de méthyl cellosolve.

24. Composition de revêtement suivant la revendication 18, dans laquelle le copolymère de type fluor est utilisé en une quantité de 5 à 50% en poids par rapport à la quantité combinée du copolymère et du solvant organique.

25. Composition de revêtement suivant la revendication 18, dans laquelle le copolymère de type fluor est utilisé en une quantité de 30 à 50% en poids par rapport à la quantité combinée du copolymère et du solvant organique.

26. Composition de revêtement préparée par dissolution d'un copolymère de type fluor et d'une résine acrylique thermoplastique dans un solvant organique, le copolymère comprenant:
    (i) 70 à 84,9% en moles d'une unité structurale représentée par la formule (a) :

$-CH_2-CF_2-$

(ii) 10 à 20% en moles d'une unité structurale représentée par la formule (b) :

$-CF_2-CF_2-$

(iii) 5 à 15% en moles d'une unité structurale représentée par la formule (c) :

$-CF_2-CFCl-$

et

(iv) 0,1 à 10% en moles d'une unité structurale (d) de fluorooléfine.

27. Composition de revêtement suivant la revendication 26, dans laquelle le copolymère de type fluor comprend 70 à 80% en moles de l'unité structurale (a), 10 à 20% en moles de l'unité structurale (b), 9,5 à 15% en moles de l'unité structurale (c) et 0,5 à 5% en moles de l'unité structurale (d).

**28.** Composition de revêtement suivant la revendication 26, dans laquelle la fluorooléfine est choisie parmi le trifluoroéthylène, le fluorure de vinyle, l'hexafluoropropylène et un perfluoro(éther vinylique d'alkyle).

**29.** Composition de revêtement suivant la revendication 26, dans laquelle la résine acrylique thermoplastique est au moins une espèce sélectionnée parmi le méthacrylate de méthyle, le méthacrylate d'éthyle, le méthacrylate de n-butyle, le méthacrylate d'isobutyle, l'acrylate de méthyle et l'acrylate d'éthyle.

**30.** Composition de revêtement suivant la revendication 26, dans laquelle la résine acrylique thermoplastique a une viscosité intrinsèque de 0,05 à 0,50 dans le diméthylformamide à 35°C.

**31.** Composition de revêtement suivant la revendication 26, dans laquelle la résine acrylique thermoplastique a une viscosité intrinsèque de 0,15 à 0,80 dans le diméthylformamide à 35°C.

**32.** Composition de revêtement suivant la revendication 26, dans laquelle la résine acrylique thermoplastique est utilisée en une quantité de 10 à 1.900 parties en poids pour 100 parties en poids du copolymère de type fluor.

**33.** Composition de revêtement suivant la revendication 26, dans laquelle la résine acrylique thermoplastique est utilisée en une quantité de 10 à 400 parties en poids pour 100 parties en poids du copolymère de type fluor.

**34.** Composition de revêtement suivant la revendication 26, dans laquelle le solvant organique est au moins une espèce sélectionnée parmi des cétones et des esters qui ont un point d'ébullition de 60 à 250°C.

**35.** Composition de revêtement suivant la revendication 26, dans laquelle le solvant organique est au moins une espèce sélectionnée parmi l'acétone, la méthyl éthyl cétone, la méthyl isobutyl cétone, la cyclohexanone, l'acétate d'éthyle, l'acétate de n-butyle et l'acétate de méthyl cellosolve.

**36.** Composition de revêtement suivant la revendication 26, dans laquelle le copolymère de type fluor et la résine acrylique thermoplastique sont utilisés en une quantité de 5 à 50% en poids par rapport au poids de la composition.

**37.** Composition de revêtement suivant la revendication 26, dans laquelle le copolymère de type fluor et la résine acrylique thermoplastique sont utilisés en une quantité de 30 à 50% en poids par rapport au poids de la composition.